# EUROPEAN PATENT APPLICATION

(11) **EP 1 233 254 A1**
(43) Date of publication of application: **21.08.2002**
(21) Application number: 02251009.3
(22) Date of filing: 14.02.2002
(51) Int. Cl.: G01G 19/44

(54) **Personal weighing scale**

(30) Priority: 14.02.2001 GB 0103646
(71) Applicant: Terraillon Holdings Limited, Dublin (IE)
(72) Inventor: Mulchrone, Fergal, Booterstown, County Dublin (IE)
(74) Representative: Johnson, Terence Leslie

(57) **Abstract**

The invention relates to a personal weighing scale or platform scale (1) in which there is a base (2) and a platform (3) on which a user stands so that his or her weight may be determined by a weight responsive mechanism usually held within the base (2) of the platform scale (1) and which is displayed through a window (4) for viewing. This window (4) is in the platform (3) of the scale at one end and is surrounded by a surround or bezel (5). The platform (3) and the bezel (5) have respective releasably interengageable attachment means in the form of a plurality of clips. The user can then provide a desired aesthetic effect by releasing one bezel (5) from the platform scale (1), removing it, and replacing it by another desired colour of the set of differently-coloured bezels (5).

## Description

The invention relates to a personal weighing scale, particularly such a scale as is commonly referred to as a bathroom scale.

Generally such scales have a base which is placed on a substrate such as a bathroom floor and which contains a weight responsive mechanism which is connected to a readout device which the user of the scale can view, in order to find out the weight recorded when he or she stands on a weight receiving platform of the scale, the viewing means usually comprising a "window" at one end of the scale. These "windows" can be plain glass, in the form of a lens, or indeed an LCD device but in each instance they are required to be mounted in the platform. Personal weighing scales are usually durable and so their style can in certain cases become out-of-date.

It is accordingly an object of the invention to seek to minimise or obviate this disadvantage.

According to the invention there is provided a personal weighing scale having a window in which a weight recorded by a user can be viewed, comprising a bezel providing a surround for the window, which is releasably mountable on the platform.

Preferably, there may be a plurality of bezels, so that one may be replaced by another.

Each bezel of the plurality of bezels may be of a different colour from each of the others.

There may be releasably interengageable means whereby the or each bezel is releaseably attachable to the platform.

The means may comprise releasable clip means. Preferably, the clip means may comprise a combination of clips which in use face a rear of the scale and a plurality of substantially in use vertically extending clip means.

A platform scale embodying the invention is hereinafter described, by way of example, with reference to the accompanying drawings in which:
Fig. 1 shows a perspective view of a scale according to the invention; and
Figs. 2A - 2C show respectively mounting of a bezel of a plurality of bezels according to the invention;

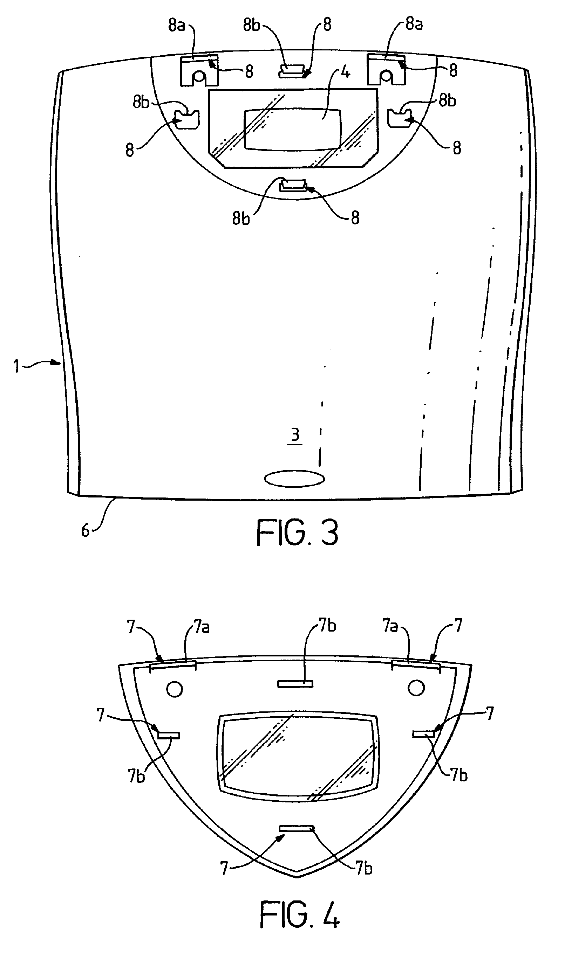

Fig. 3 shows a top plan view of the scale of Fig. 1 with the bezel removed; and
Fig. 4 shows an underneath plan view of a bezel.

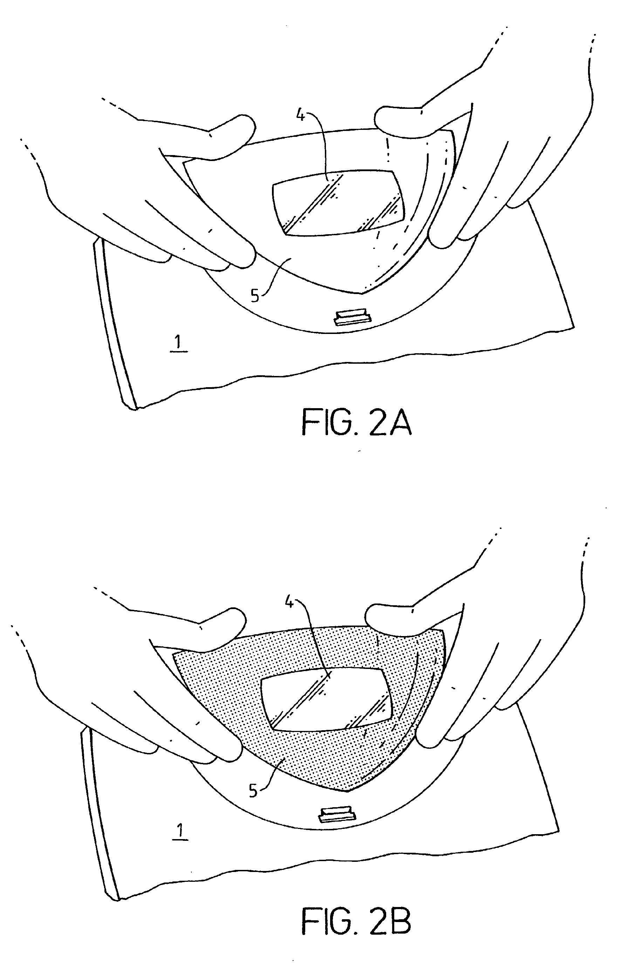

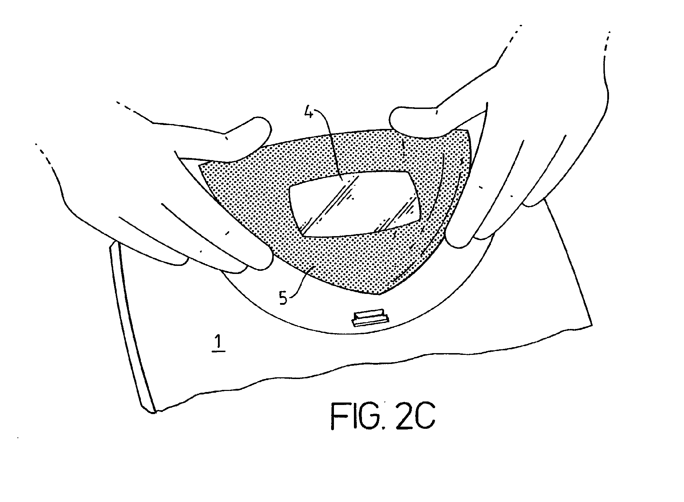

Referring to the drawings there is shown a personal weighing scale or platform scale 1 in which there is a base 2 which is adapted for placing on a substrate such as a floor of a bathroom, and a platform 3 on which a user stands so that his or her weight may be determined by a weight responsive mechanism (not shown) usually held within the base 2 of the platform scale 1 and which is displayed through a window 4 for viewing, in this case 56.3 kilograms being the weight of the user. This window 4 is in the platform 3 of the scale at one end and is surrounded by a surround or bezel 5. The bezel 5 has a window 4' for overlying the window 4 in the platform. The platform 3 and the bezel 5 have respective releasably interengageable attachment means in the form of a plurality of clip means 8, 7 respectively. The clips or combination thereof 8, 7 lock the bezel 5 in place and can be removed by unlocking rear facing clips 7a of the bezel from corresponding clips 8a of the platform, pushing or sliding the bezel 5 in the direction of the bottom end 6 of the platform 3 (Figs. 2a - 2c) to unlock clips 7b which are substantially vertically arranged and depend from the underside of the bezel 5, in order to release those clips, the rear clips 8a, 7a having been released or unlocked from one another, and then the bezel 5 is lifted away from the platform 3.

The clips 7a are depending hook like clips with a barb thereof directed rearwardly (in a direction opposite the end 6) to seat behind a ledge or shoulder forming the clip means 8a, which depend from the platform 3, which has a hole for receiving the clips 7a. The clip means 7b are in the form of U-shaped members which each have legs integral with and depending from the underside of the bezel, and the "base" of the 'U', joining the legs, being spaced from the underside of the bezel to form a space in which clips in the form of teeth 8b are received, there being an orifice in the platform forward of the teeth 8b in each case to receive the clip 7b. Natural resiliency of the bezel, made of plastic, assists in clip engagement. The bezel with its clips is integrally moulded in plastic.

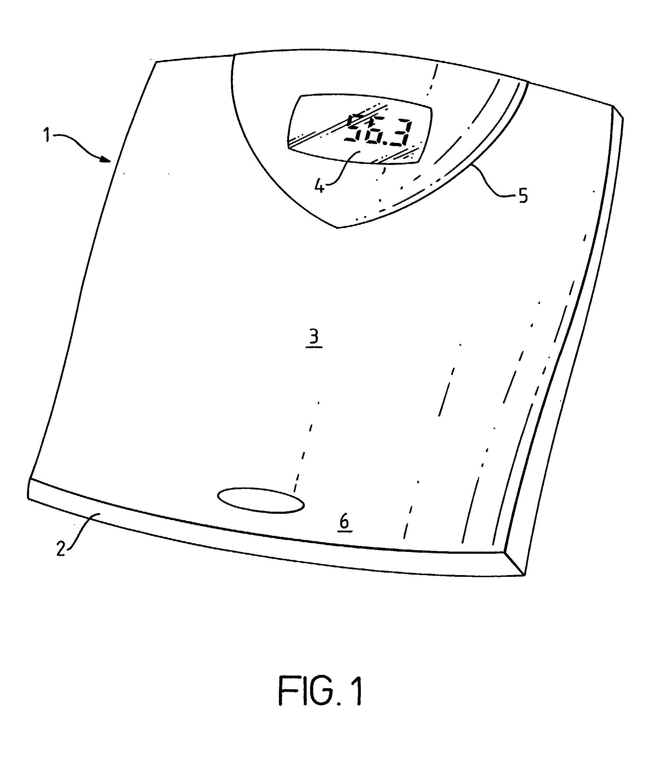

This may be necessary if the bezel becomes damaged and then is replaced by a non-defective one, however, the main use is to provide a set of bezels for example of different colours, for example in Fig. 1A the colour may be yellow, in 1B blue, and in 1C purple. The user can then provide a desired aesthetic effect by releasing one bezel 5 from the platform scale 1 as described, removing it, and replacing it by another desired colour of the set of differently-coloured bezels 5. The user is thus enabled to change the bezel to effect a colour change on the product, namely the personal weighing scale.

It will be understood that the interengageable releasable means on each bezel of the set of bezels is identical, for releasable locking engagement with the clips of the platform.

Alternatively, there are no clips as such on the platform, it is the surround of the window 4 which provides an anchorage for clips which depend downwardly from each bezel 5, into the body 2 of the scale 1 as considered in use. Thus the edge of each bezel may include a plurality of spaced depending hook means with their hooks projecting outwardly, i.e. in a direction to engage the part of the platform 3 defining the window 4.

## Claims

1. A personal weighing scale, comprising a window in or through which a weight recorded by a user can be viewed, **characterised by** a surround or bezel (5) which is removably mountable on the platform (3).

2. A scale according to Claim 1, **characterised by** a plurality of bezels (5) providing a set thereof whereby one is adapted to replace another on the platform (3).

3. A scale according to Claim 2, **characterised by** there being three bezels (5), each of a different colour.

4. A scale according to any preceding claim, **characterised by** there being releasably interengageable means whereby the or each bezel (5) is releasably mountable on the platform (3).

5. A scale according to Claim 4, **characterised by** the means comprising releasable clip means (7, 8).

6. A scale according to Claim 5, **characterised by** the clip means (7, 8) comprising substantially vertically arranged clips (7a, 7b) which are disengageable by sliding a bezel (5) towards a bottom end (6) of the platform (3) whereby to allow the bezel to be lifted away from the platform (3).

7. A scale according to Claim 6, **characterised by** there being a plurality of clips (7) spaced apart around a periphery of the or each bezel (5) and directed in use in a direction into the platform (3), there being a plurality of complimentary clips (8) in the platform for releasable locking engagement with the clips of the or each bezel (5).

8. A scale according to Claim 7, **characterised by** some of the clips (7a) of the or each bezel facing rearwardly.

9. A scale according to any preceding claim, **characterised by** clips (7b) comprising U-shaped members depending from the underside of the bezel.

10. A set of parts, comprising a platform scale (1), **characterised by** a plurality of bezels (5), for a viewing window (4) of the scale (1), and by a platform (3) of the scale (1) and a bezel (5) being releasably interengageable whereby to allow a desired bezel to be mounted on the platform (3) of the scale (1) surrounding the window (4).
